Europäisches Patentamt

(19) European Patent Office

Office européen des brevets

(11) Numéro de publication: **0 295 990**
**A1**

(12) **DEMANDE DE BREVET EUROPEEN**

(21) Numéro de dépôt: **88401288.1**

(22) Date de dépôt: **26.05.88**

(51) Int. Cl.⁴: **G 01 J 5/00**

(30) Priorité: **27.05.87 FR 8707478**

(43) Date de publication de la demande:
**21.12.88 Bulletin 88/51**

(84) Etats contractants désignés: **BE CH DE GB LI**

(71) Demandeur: **COMMISSARIAT A L'ENERGIE ATOMIQUE**
**31/33, rue de la Fédération**
**F-75015 Paris (FR)**

(72) Inventeur: **Sanson, Charles**
**Le Clos des Barres**
**F-84510 Caumont Sur Durance (FR)**

Monier, Jean
6/8, rue René Roeckel
F-92340 Bourg La Reine (FR)

Schoepp, Robert
11, rue Jean
F-13004 Marseille (FR)

Bourrelly, Paul
27, Boulevard Haguenau
F-13012 Marseille (FR)

Patin, Henri
122 A rue Ferrari§Saint Jérôme
F-13005 Marseille (FR)

(74) Mandataire: **Mongrédien, André et al**
**c/o BREVATOME 25, rue de Ponthieu**
**F-75008 Paris (FR)**

(54) **Dispositif pour relever l'empreinte thermique d'objets calogènes par fluxmétrie thermique infrarouge.**

(57) Dispositif pour relever l'empreinte thermique d'objets calogènes par fluxmétrie thermique infrarouge.

Ce dispositif comprend des premiers moyens (40) pour repérer sur l'objet un premier ensemble de surface cibles (10a), des seconds moyens (42) pour repérer un second ensemble de surfaces cibles, sur une structure thermiquement conductrice située dans le milieu environnant (10), un guide d'ondes infrarouges (20) présentant une extrémité (22) destinée à être placée successivement au contact de chaque surface cible et servant à véhiculer le rayonnement infrarouge émis par la surface cible en contact avec cette extrémité, un pyromètre à infrarouge (2) fixé à l'autre extrémité du guide, pourvu d'une lentille focalisant le rayonnement infrarouge véhiculé par le guide sur un détecteur pyroélectrique (8) délivrant un signal électrique proportionnel au nombre de photons infrarouges émis par la surface cible considérée, des moyens de traitement (14) du signal électrique pour déterminer la température de chaque surface cible en vue d'établir l'empreinte thermique (P) de l'objet.

FIG. 1

## Description

# DISPOSITIF POUR RELEVER L'EMPREINTE THERMIQUE D'OBJETS CALOGENES PAR FLUXMETRIE THERMIQUE INFRAROUGE.

## DESCRIPTION

La présente invention a pour objet un dispositif servant à relever l'empreinte thermique d'un objet calogène, par mesure du rayonnement infrarouge dégagé par cet objet.

Elle s'applique en particulier au contrôle quantitatif et non destructif de matières nucléaires radio-actives contenant des nucléides radio-actifs ayant une période de désintégration relativement courte comme par exemple le tritium, l'américium, le plutonium , placées dans un conteneur étanche ; ce contrôle peut être effectué, notamment, au cours de la fabrication, de la mise en oeuvre, du retraitement ou du stockage de ces matières nucléaires.

Pour un conteneur renfermant de la matière calogène, en équilibre thermique avec son environnement, le flux thermique total émis par ce conteneur peut être évalué rapidement si, en déterminant les différents flux unitaires, on ne perturbe pas cet équilibre thermique. A cet effet, il faut que l'on détermine les températures de surface du conteneur à l'aide de capteurs les moins perturbants possible. Le conteneur constitue un puits de chaleur.

Pour de plus amples détails sur les méthodes de mesure des températures de surface utilisant un rayonnement thermique ou infrarouge, on peut se référer à la publication Rev. Gen. Therm., Fr n° 12, avril 1976 de François DESVIGNES, pages 303-312): Méthodes de mesure des températures de surface utilisant le rayonnement

Dans le cas général, le flux thermique total est émis par le conteneur de façon anisotrope vers l'ensemble de l'espace environnant ledit conteneur, de telle sorte que le flux thermique total ne peut être obtenu que par sommation d'un grand nombre de flux unitaires mesurés tout autour du conteneur.

Actuellement, la détermination du flux thermique total dégagé par un objet calogène ou puits de chaleur peut être réalisée à l'aide de capteurs matériels ou par thermographie infrarouge.

Lorsque l'on utilise des capteurs matériels, pour mesurer le flux thermique, l'usage de thermistances est généralement préconisé préférentiellement aux thermocouples et aux résistances métalliques, en raison de leur faible volume unitaire et de leur grande sensibilité. Ainsi, ces thermistances ne perturbent pas l'équilibre thermique du conteneur dans son environnement et leur nombre et leur répartition judicieuse autour du conteneur, permettent par une modélisation suffisamment fine d'atteindre assez fidèlement le flux thermique total émis, grâce à un étalonnage préalable. Ce mode d'utilisation a été décrit dans le brevet FR-A- 2 544 860 du 19/04/83 déposé au nom du demandeur.

En thermographie infrarouge, les tentatives pour résoudre le problème de la quantification du flux thermique ne peuvent aboutir que si l'on peut correctement reconstituer quantitativement la totalité de l'image thermique ou empreinte thermique de la surface chaude et de la surface froide du puits de chaleur, et donc si l'on connaît les différences de température responsables des différents flux thermiques unitaires.

Dans le cas d'un conteneur directement visible sous toutes ses faces, il peut être correctement traité au moyen d'une caméra infrarouge. Le traitement numérique de l'image fournie par la caméra permet l'archivage de l'empreinte thermique déposée sur la paroi externe du conteneur par son contenu calogène ainsi que l'évaluation du flux thermique total émis par le conteneur.

Lorsque le conteneur possède une symétrie de révolution ou une symétrie d'ordre élevé (cube, cylindre, cône), le traitement informatique est relativement simple ; en revanche, pour un conteneur de forme complexe, ce traitement est compliqué, nécessitant l'emploi d'une électronique et d'une informatique complexes, donc coûteuses.

Par ailleurs, une caméra infrarouge accompagnée de ses équipements électroniques et informatiques pèse environ 30 kg et nécessite souvent l'usage d'azote liquide, pour refroidir le détecteur infrarouge. De plus s'il existe des structures parasites s'opposant à la vue directe de l'ensemble des surfaces du conteneur siège du transfert thermique, ce qui est généralement le cas de conteneurs renfermant de la matière radio-active qui sont disposés dans des cages de stockage ou de transport, l'utilisation d'une caméra à infrarouge est mal adaptée aussi bien à la détermination quantitative du flux thermique émis qu'à l'archivage de l'empreinte thermique significative du contenu calogène.

Enfin, il est très difficile de comparer quantitativement des images anciennes archivées et des images nouvelles, pour un même objet, du fait de la grande complexité de ces images même pour un conteneur à symétrie de révolution.

Les différents inconvénients de la caméra infrarouge limitent considérablement son utilisation dans le cas de contrôles quantitatifs et non destructifs d'objets calogènes.

A la place de la caméra infrarouge, on pourrait utiliser un imageur thermique qui donne généralement une image de faible définition sur un écran cathodique mais permet l'enregistrement par photo de l'écran. En outre, cet imageur ne permet de donner qu'une seule image à la fois, difficilement numérisable, ne pouvant ainsi fournir que des renseignements d'ordre qualitatif sur l'empreinte thermique transférée sur la paroi extérieure du conteneur par la matière calogène qu'il renferme, et ne permettant donc pas la détermination quantitative du flux thermique total dégagé par le conteneur.

Lorsque la détermination quantitative exacte du flux thermique total émis est impossible ou mal aisée, une modélisation thermique est alors nécessaire et impose l'établissement d'une trame ponctuelle de surfaces unitaires ou cibles chaudes et froides, représentatives de la totalité du flux thermique émis.

L'usage d'une trame de thermistances, de forme adaptée à chaque conteneur, constitue souvent une solution pour l'établissement de cette modélisation thermique. Toutefois, cette dernière technique nécessite des liaisons électriques nombreuses et donc encombrantes et fastidieuses à mettre en oeuvre, en particulier dans le cas de controles répétitifs de nombreux conteneurs similaires présentant une empreinte thermique complexe.

On peut aussi effectuer le relevé d'empreintes thermiques d'objets calogènes à l'aide d'un pyrométre optique, en effectuant une mesure point par point. Dans ce cas, on choisit le nombre de visées ou prises de vue à faire, puis on fige l'ordre des visées afin de pouvoir attribuer à chaque température déterminée, un point bien précis de l'objet. Malheureusement, une erreur de visée ou une erreur dans la séquence des visées n'est pas inévitable faussant ainsi le relevé de l'empreinte thermique.

Par ailleurs, pour obtenir une reproductibilité de mesure suffisamment bonne avec un pyromètre optique, il faut éliminer dans la mesure du possible les sources de chaleur parasites ; éliminer les courants d'air faisant varier les températures superficielles des objets calogènes puisque ce sont ces températures que l'on mesure ; éliminer les erreurs dues à une variation de la distance pyromètre-objet, qui déterminent une grandeur de plage visée plus ou moins grande en fonction de la mise au point.

Ce dernier facteur serait facile à "geler" par la fixation du pyromètre sur un pied. Toutefois, une telle solution ne permettrait l'utilisation du pyromètre que pour un objet pour lequel aucune structure parasite ne risquerait de s'intercaler entre l'objet et le pyromètre, lors des visées successives.

L'invention a justement pour objet un dispositif pour relever l'empreinte thermique d'objets calogènes permettant de remédier aux différents inconvénients énoncés ci-dessus. Il utilise la modélisation d'une empreinte thermique significative de l'objet calogène, par constitution d'une trame ponctuelle de points de mesure tout en éliminant les liaisons électriques contraignantes généralement utilisées pour cette modélisation.

Ce relevé est conditionné par :

- une étude thermique préalable, suffisamment fine et adaptée à chaque type de conteneurs,

- une bonne reproductibilité de la forme de la trame ponctuelle, et

- une détermination correcte des différences de température entre les surfaces cibles froides et chaudes responsables des flux thermiques unitaires.

A cet effet, l'invention a pour objet un dispositif pour relever l'empreinte thermique d'un objet calogène comportant :

- des premiers moyens pour repérer sur l'objet un premier ensemble d'éléments de surfaces cibles définissant une surface chaude,

- des seconds moyens pour repérer un second ensemble d'éléments de surfaces cibles définissant une surface froide, sur une structure thermiquement conductrice située dans le milieu environnant l'objet calogène, les deux surfaces chaude et froide servant à la détermination du flux thermique total dégagé par l'objet,

- un guide d'onde infrarouge présentant une première extrémité et une seconde extrémité destinée à être placée successivement au contact de chaque élément de surface cible, ce guide servant à véhiculer le rayonnement infrarouge émis par l'élément de surface en contact avec ladite seconde extrémité,

- un pyromètre à infrarouge fixé à la première extrémité du guide d'onde, pourvu d'une optique d'entrée destinée à focaliser le rayonnement infrarouge véhiculé par le guide d'onde sur un détecteur pyroélectrique délivrant un signal électrique représentatif du nombre de photons infrarouges émis par l'élément de surface en contact avec ladite seconde extrémité,

- des moyens de traitement du signal électrique pour déterminer la température de l'élément de surface en contact avec ladite seconde extrémité, en vue d'établir l'empreinte thermique de l'objet.

Avantageusement, ce dispositif comprend en outre, des moyens de mémorisation et/ou des moyens de visualisation des températurres mesurées.

L'utilisation des premiers et seconds moyens de repérage montés respectivement sur l'objet à étudier et la structure de référence permet d'établir sans ambiguïté la forme de la trame ponctuelle des surfaces cibles chaudes et froides nécessaires à la détermination du flux thermique émis par l'objet calogène vers son environnement.

De façon avantageuse, les premier et second moyens de repérage sont formés de structures perforées afin que leur présence, à proximité des surfaces cibles chaudes ou froides, ne perturbe pas de façon sensible le régime de fuites thermiques établi entre le conteneur et la structure de référence. En outre, ces perforations doivent pouvoir laisser passer la seconde extrémité du guide optique, destinée à être placée au contact des surfaces cibles.

La structure de référence peut être une structure entourant l'objet calogène ou toute structure présent dans le milieu entourant l'objet et si cette structure n'existe pas, il y a lieu d'en ajouter une. Pour un objet déterminé, la structure de référence est toujours la même et toujours située au même endroit par rapport à l'objet calogène.

Le guide d'onde fixé sur le pyromètre à infrarouge d'une part, et d'autre part sur l'une des surfaces cibles est destiné à :

- éliminer les erreurs de mise au point qui entraînent des erreurs sur les températures calculées des surfaces cibles, donc des erreurs sur les différences de température, et donc des erreurs sur les flux thermiques unitaires ;

- éliminer l'influence des courants d'air pendant la durée de la mesure (de l'ordre de la seconde) ;

éliminer les rayonnements infrarouges parasites éventuels ;

éliminer les erreurs de visée fréquentes quand l'objet est de couleur uniforme car très souvent la totalité du champ de visée (environ 10 degrés d'angle) est occupée par une surface de couleur uniforme alors que la température n'y est pas du tout uniforme ; notons de plus que le pyromètre à infrarouge doit, pour des raisons de mobilité et de rapidité de mesure, être tenu à la main ;

- permettre, dans certains cas, une orientation non perpendiculaire par rapport à la surface cible ; et

- permettre des mesures fiables en contournant les structures qui sont susceptibles de masquer les surfaces cibles à tester.

La complexité de l'image thermique impose le nombre et la taille des surfaces cibles. En outre, la forme des structures parasites impose d'une part la longueur focale de l'optique d'entrée du pyromètre et d'autre part la longueur et la forme du guide d'onde.

Afin d'assurer une légèreté au dispositif selon l'invention et d'en faire par conséquent un dispositif portatif, le guide d'onde est réalisé avantageusement en un matériau léger par exemple en un tube de carton ou de polychlorure de vinyle dont les parois internes sont recouvertes d'un matériau réfléchissant les rayonnements infrarouges tel qu'une couche d'aluminium polie. Ce guide d'onde peut aussi être réalisé en un métal léger et en particulier sous la forme d'une feuille d'aluminium enroulée, de 0,2 mm d'épaisseur par exemple.

Dans le cas d'un guide optique en matériau conducteur thermique, une couche de matériau isolant thermique est avantageusement prévue tout autour du guide optique, pour éviter l'absorption de rayonnement infrarouge parasite externe par le guide conducteur. Ce matériau isolant est par exemple une mousse de polyéther collée directement sur le guide d'onde.

En outre, un manchon isolant thermiquement peut avantageusement être prévu sur le guide d'onde afin de permettre le maintien du guide par l'utilisateur.

Le guide d'onde est avantageusement équipé à sa seconde extrémité d'un embout ou manchon souple, analogue à un paresoleil par exemple, qui a pour but d'éviter les chocs du guide d'onde sur l'objet et donc la détérioration de l'objet ou celle du système de mise au point mécanique, de l'optique d'entrée du pyromètre à infrarouge sur lequel est fixé le guide d'onde, et de pallier une non-perpendicularité résiduelle de visée par rapport à la surface cible.

D'autres caractéristiques et avantages de l'invention ressortiront mieux de la description qui va suivre, donnée à titre illustratif et non limitatif, en référence aux figures annexées, dans lesquelles :

- la figure 1 représente schématiquement, en coupe longitudinale, un dispositif conforme à l'invention,

- les figures 2a, 2b, 2c illustrent schématiquement, en coupe longitudinale, différents modes de réalisation du guide d'onde du dispositif de la figure 1,

- les figures 3a et 3b représentent schématiquement en vue de dessus, un premier mode de réalisation des réglettes de repérage respectivement des surfaces cibles chaudes et froides,

- la figure 4 représente un autre mode de réalisation des réglettes de repérage des surfaces cibles froides,

- la figure 5 représente un conteneur de transport de combustible nucléaire, logé dans une cage de transport et dont on veut relever l'empreinte thermique conformément à l'invention,

- la figure 6 donne l'empreinte thermique du conteneur de transport de la figure 5, et

- la figure 7 représente un autre mode de réalisation d'un conteneur de transport de matériau radio-actif auquel est appliqué le dispositif selon l'invention.

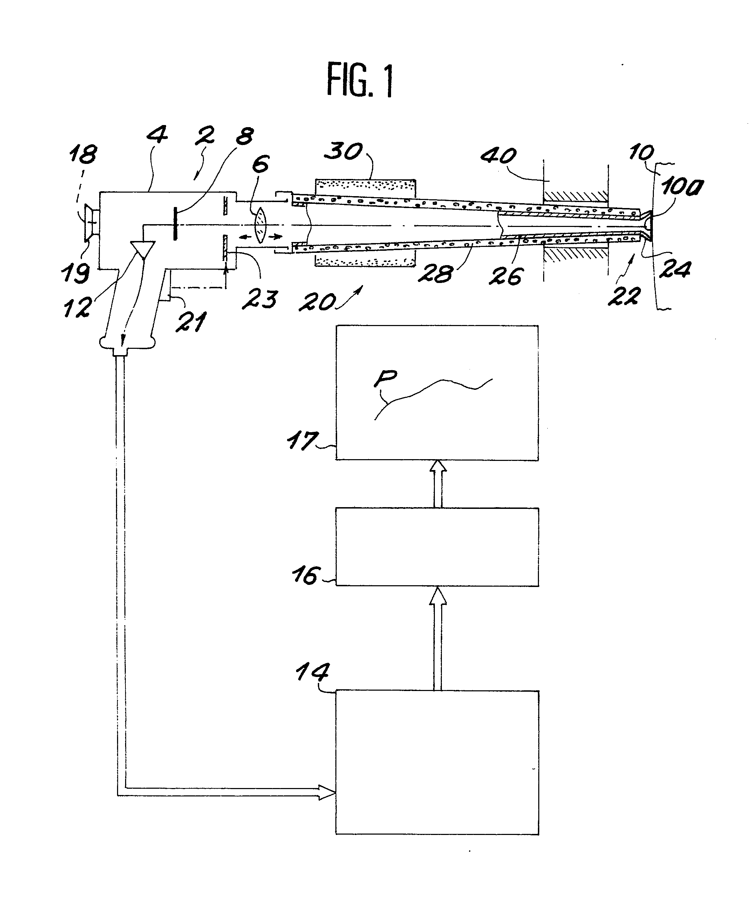

Le dispositif selon l'invention, représenté sur la figure 1, comprend un pyromètre à infrarouge 2 comportant un boîtier étanche 4 dans lequel est logée une optique d'entrée 6, transparente au rayonnement infrarouge et un détecteur pyroélectrique 8 non refroidi.

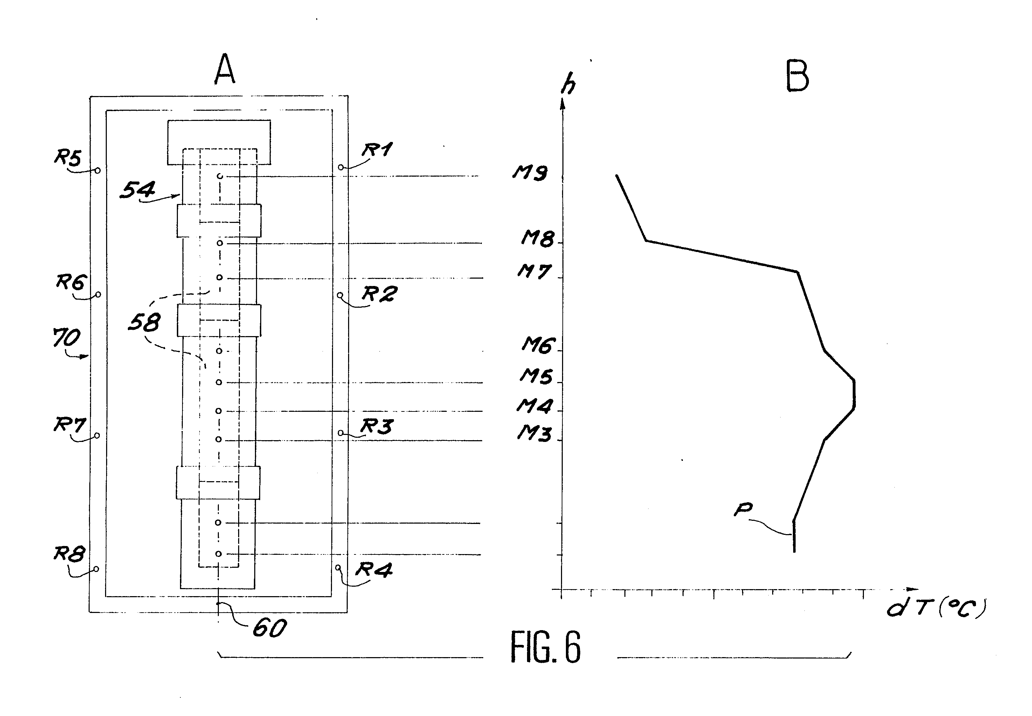

L'optique d'entrée 6 du type objectif ou lentille de focalisation, sert à la focalisation du rayonnement infrarouge émis par un objet calogène 10 dont on veut relever l'empreinte thermique (ou bien émis par une structure de référence placée dans le milieu environnant l'objet 10 - figures 5, 7).

Le détecteur pyroélectrique peut être, suivant le domaine de température concerné, du type cellule photoélectrique, thermoélectrique, thermistor, un thermomètre électrique à résistance, etc. Il en est de même pour la nature chimique du détecteur.

Le pyromètre 2 peut être en particulier celui fourni par les sociétés AGEMA ou MINOLTA-LAND sous le nom commercial Thermopoint ou Cyclops respectivement, car leurs caractéristiques satisfont à tous les critères nécessaires à la mesure.

Il est à noter que la connaissance de la température absolue exacte n'est pas nécessaire ; seule la connaissance de différences de température entre une surface chaude et une surface froide est utile à la détermination des flux thermiques et des empreintes thermiques.

Le détecteur 8 délivre un signal électrique, proportionnel au nombre de photons infrarouges reçu d'une surface cible 10a de l'objet à contrôler (ou de la structure de référence), pour la longueur d'onde d'étude. Pour des températures de 1000°C la longueur d'onde d'étude est de 1 µm environ et pour des températures de 20°C (ambiant) la longueur d'onde d'étude est de 10 µm environ.

Le signal électrique fourni par le détecteur est amplifié à l'aide d'un amplificateur 12 logé aussi à l'intérieur du boîtier 2 du pyromètre. Le signal électrique amplifié est alors envoyé dans une électronique de traitement 14 permettant de convertir en température le signal électrique amplifié.

Cette température est alors archivéee dan une mémoire ou un micro-ordinateur 16 relié électriquement à l'électronique de traitement 14, pour traiter de façon instantanée ou différée les informations reçues afin d'établir le modèle significatif de l'empreinte thermique de l'objet 10 et d'en déduire un flux thermique total émis. Cette empreinte thermique est par exemple un profil thermique P tracé par exemple sur une table traçante ou visualisé sur un écran 17, relié au micro-ordinateur 16.

Par ailleurs, le pyromètre 2 est pourvu, dans le prolongement de l'optique d'entrée 6 et du détecteur pyroélectrique 8, transparent à la lumière du jour, d'un hublot de sortie transparent 18 équipé d'un oeilleton 19 permettant à l'observateur de viser et de mettre au point la surface cible 10a, et d'un déclencheur manuel 21 commandant l'ouverture d'un diaphragme 23 intercalé entre l'optique d'entrée 6 et le détecteur 8.

Sur l'extrémité d'entrée du pyromètre 2, est fixé un guide d'onde 20 à infrarouge dont l'extrémité 22, destinée à être appuyée sur une surface cible 10a, est équipée d'un manchon souple ou soufflet 24, de type pare-soleil en caoutchouc, pouvant épouser parfaitement l'élément de surface 10a que l'on vise.

Le guide d'onde 20 est réalisé en une feuille d'aluminium 26 de 0,2 mm d'épaisseur par exemple roulée en cône et collée, enrobée d'une mousse de polyéther 28 collée, de 6 mm d'épaisseur, servant à l'isolation thermique du guide d'onde vis-à-vis de l'environnement. Un manchon rigide 30 thermiquement isolant, par exemple en polychlorure de vinyle (PVC), permet le maintien du guide d'onde 20 par l'utilisateur, en particulier lors de sa fixation sur la lentille d'entrée 6 du pyromètre, sans échauffement du guide d'onde par la main de l'utilisateur.

Le guide d'onde 20, représenté sur la figure 1, est simplement tronconique, sans miroir de renvoi. Il présente une longueur de 70 cm environ, un diamètre d'entrée de 48 mm, un diamètre de sortie de 15 mm.

En plus des avantages donnés précédemment, l'utilisation d'un guide d'onde de longueur constante permet de fixer, pour les différentes mesures ou visées à effectuer, la distance séparant l'optique d'entrée 6 et la surface cible 10a à analyser, ce qui permet d'éliminer les erreurs dues à une variation de cette distance.

Le guide d'onde décrit ci-desssus réunit les qualités indispensables de légèreté, rigidité, faible coefficient d'émissivité d'infrarouge à l'intérieur du guide d'onde et relative insensibilité aux influences thermiques extérieures. Le coût de réalisation de ce type de guide d'onde est particulièrement réduit. Toutefois dans le cas où le coût du dispositif n'intervient pas trop dans le choix du guide d'onde, un guide d'onde réunissant les mêmes qualités optiques peut être constitué par une fibre optique, transparente aux rayonnements infrarouges, adaptée à la gamme de température considérée. Le diamètre convenable de cette fibre est de l'ordre de 1 à 10 mm, ce qui impose l'utilisation de verres ou matières plastiques spéciaux donc coûteux. La flexibilité de la fibre optique permet de résoudre les problèmes de contournement des structures parasites.

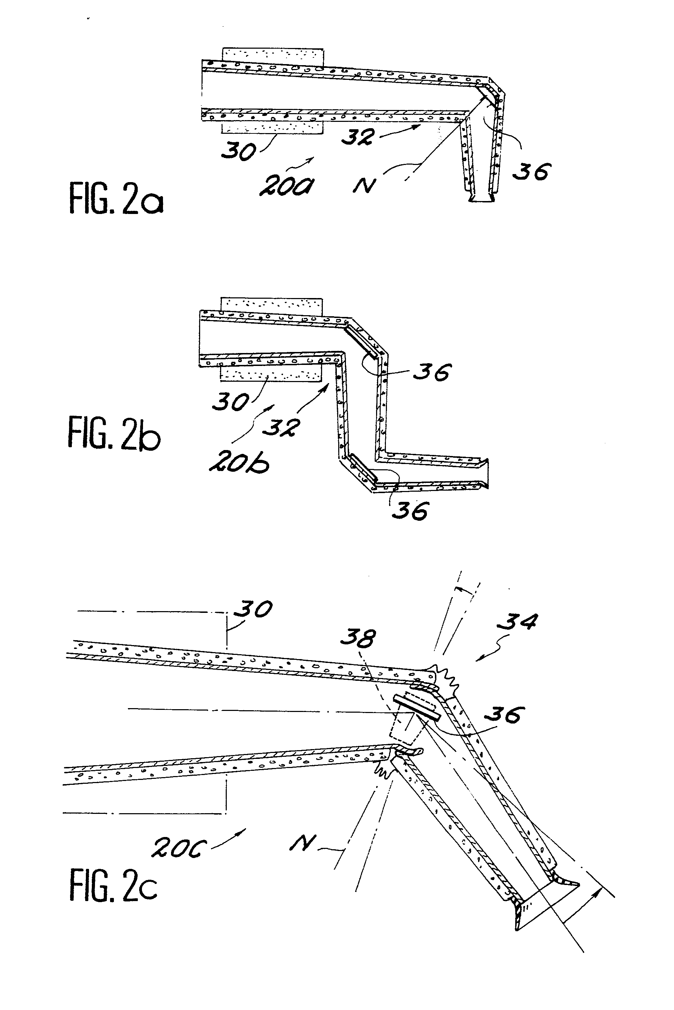

Dans le cas de structures (figure 5) s'opposant à la vue directe des surfaces 10a cibles froides ou chaudes à analyser, il est nécessaire de remplacer le guide d'onde 20 rectiligne par un guide d'onde 20a, 20b ou 20c, représenté respectivement sur les figures 2a, 2b et 2c. Ces guides d'onde sont coudés (figures 2a, 2b) ou articulés (figure 2c). Ils peuvent présenter un ou deux coudes 32 ou bien une ou deux articulations 34 suivant la forme des structures ou obstacles masquant les surfaces cibles à analyser.

Au niveau de chaque coude et de chaque articulation 34 et à l'intérieur du guide d'onde, est prévu un miroir infrarouge 36 de renvoi, réalisé par exemple en aluminium poli. Chaque miroir est disposé de façon que la normale N à sa surface passe par la bissectrice de l'ouverture du coude 32 ou de l'articulation 34.

Dans le cas d'un guide d'onde coudé (figures 2a, 2b) les miroirs de renvoi sont fixes alors que dans un guide d'onde articulé (figure 2c), le miroir de renvoi 36 est monté sur un support mobile 38 mis en rotation de façon connue, lorsque l'on écarte ou rapproche les deux bras de l'articulation.

Afin de réaliser la modélisation de l'empreinte thermique d'un objet calogène particulier, il est nécessaire d'établir une trame ponctuelle (des surfaces unitaires ou cibles chaudes et froides) représentative de la totalité du flux thermique émis. Afin d'assurer une bonne reproductibilité géométrique de la trame ponctuelle d'un objet donné, notamment en vue de comparer une image archivée de l'empreinte thermique de cet objet avec une nouvelle image de l'empreinte thermique de ce même objet, des moyens de repérage 40 des surfaces cibles ou zones de mesure doivent être prévus.

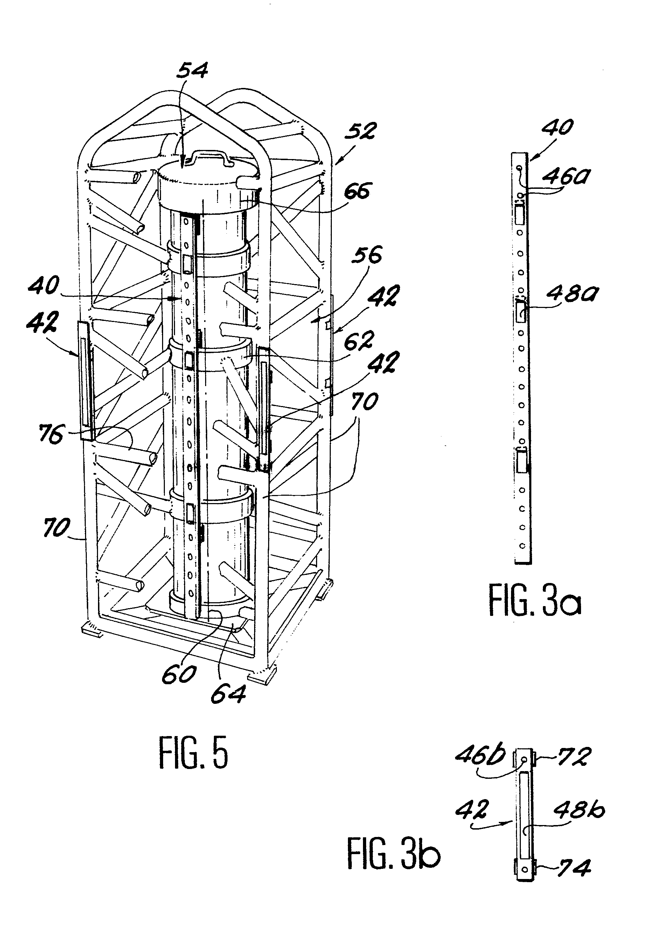

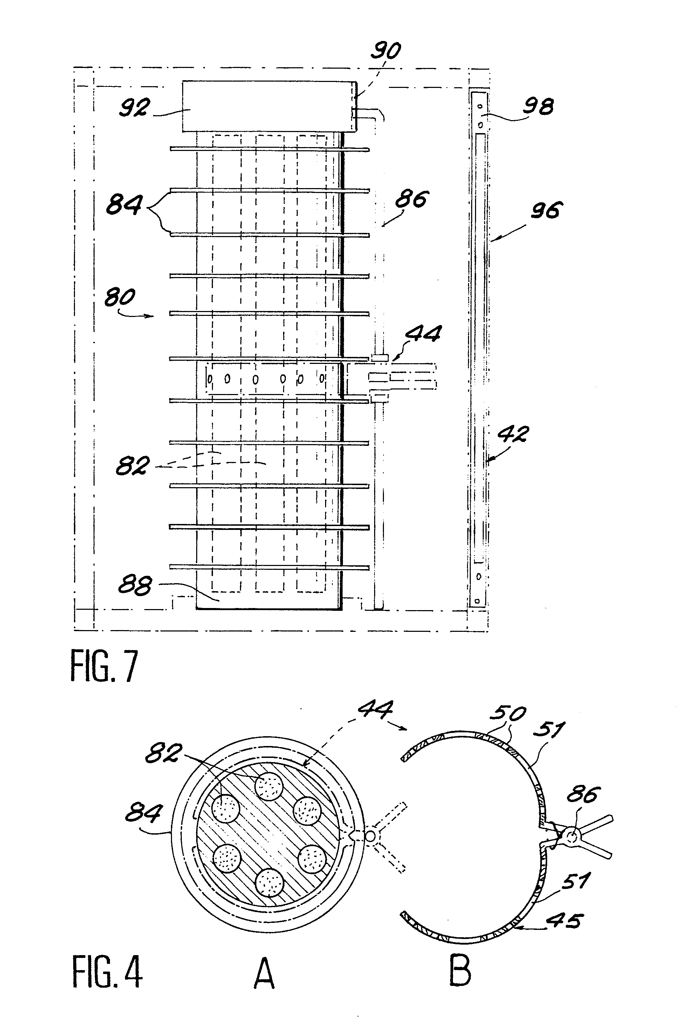

Ces moyens de repérage sont des structures perforées et se présentent sous la forme de bandes de polychlorure de vinyle, semi-rigides, fortement ajourées. En particulier, ces structures peuvent présenter la forme de réglettes 40 ou 42, suivant qu'elles servent au repérage de surfaces cibles chaudes ou froides, comme représenté sur les figures 3a et 3b, ou bien la forme d'une pince 44, comme représenté sur la figure 4, pour le repérage des surfaces chaudes, comportant une partie annulaire 45.

La forme des structures perforées servant au repérage des surfaces cibles chaudes dépend de la forme du conteneur et de la répartition de la matière calogène se trouvant à l'intérieur du conteneur à contrôler.

Les structures perforées servant au repérage des surfaces cibles chaudes ou froides, comportent deux types de perforation, 46a et 48a pour la figure 3a, 46b et 48b pour la figure 3b et 50 et 51 pour la figure 4. Les perforations 46a, 46b et 50 de forme circulaire servant au repérage respectivement des surfaces cibles sont prévues pour laisser passer l'extrémité 22 du guide d'onde 20, alors que les perforations 48a, 48b et 51 permettent d'éviter toute perturbation de l'équilibre thermique de l'objet calogène ou de la structurre de référence sur lequel les structures sont fixées.

Dans le cas où le nombre de surfaces cibles chaudes 10a est élevé, les perforations de mesure 46a dans le cas de réglettes et 50 dans le cas d'une pince 44 (figure 4) peuvent être repérées par un numéro d'ordre afin d'éviter toute confusion dans l'ordre d'enregistrement des températures des surfaces cibles chaudes correspondantes. Le nombre de surfaces cibles chaudes et donc de perforations 46a ou 50, qui sont les repères pour les mesures, dépend des dimensions de l'objet calogène à analyser et de ces caractéristiques thermiques.

En revanche, du fait de la modélisation, le nombre de surfaces cibles froides peut être beaucoup plus faible. En particulier les règlettes 42, destinées à être fixées sur une structure de référence, ne comportent que deux trous de mesure 46b.

Sur la figure 5, on a représenté une cage de transport 52 d'un conteneur de transport 54 renfermant de la matière calogène et en particulier du combustible nucléaire. Typiquement, cette cage 52 à symétrie longitudinale présente une surface de base de 50 cm x 50 cm et une hauteur maximale de 1,70 m. Cette cage 52 présente quatre faces verticales 56 identiques masquant quasi-totalement le conteneur 54 dont on veut archiver l'empreinte thermique.

Dans ce type de conteneur 54, la matière calogène est répartie dans au maximum quatre sous-conteneurs 58 tels que schématisés sur la partie A de la figure 6, de forme cylindrique, empilés les uns au-dessus des autres dans le conteneur principal 54. Dans une telle configuration, il suffit, pour évaluer le flux thermique total émis par le conteneur 54 et pour archiver un modèle d'empreinte thermique de ce conteneur permettant son identification, de connaître le profil thermique suivant une génératrice 60 de la surface externe du conteneur 54, profil rapporté à la température de référence caractérisée par la température de la structure tubulaire externe de la cage de transport 52 et donc de la température ambiante.

Dans une telle configuration, les structures perforées sont seulement au nombre de deux. La première du type de celle représentée sur la figure 3a, portant la référence 40 est fixée magnétiquement sur les renforts 62 du conteneur 54, situés à 2 cm des surfaces cibles chaudes, étant donné l'épaisseur de ces renforts 62 ; elle sert de guide de visée pour l'établissement de la trame ponctuelle relative à la surface chaude du conteneur et est parallèle à la génératrice 60 du conteneur. Elle peut être réalisée en PVC semi-rigide de 3 cm de largeur, 3 mm d'épaisseur et sa longueur est telle qu'elle s'insère exactement entre la plaque 64 qui sert de support au conteneur 54 et le couvercle 66 de ce dernier.

Les structures perforées utilisées pour un tel conteneur 54, sont en forme de règlettes étant donné que la position radiale de ces structures n'est pas cruciale. En effet, le flux thermique dégagé par le conteneur présente une symétrie de révolution dans les parties utiles à l'établissement de l'empreinte thermique du conteneur 54.

Afin de disposer la règlette 40 exactement à la même place sur le conteneur 54, chaque fois que l'on désire contrôler celui-ci, cette dernière est disposée verticalement en appui par sa partie inférieure sur la plaque 64.

La seconde structure perforée est du type de celle représentée sur la figure 3b. Elle est aussi réalisée en PVC et ne comporte que deux perforations de mesure 46b. Elle se fixe successivement sur les quatre montants verticaux 70 de la cage 52 au moyen de deux clips haut et bas respectivement 72 et 74 en matière plastique. La règlette 42 présente une largeur de 3 cm, une épaisseur de 3 mm et sa hauteur lui permet de s'insérer exactement entre deux entretoises horizontales médianes 76 de la cage 52. Les montants 70 sont équipés de repères afin de positionner toujours au même endroit les règlettes 42.

Le relevé de l'empreinte thermique du conteneur 54 est assuré avec un dispositif de mesure comportant un guide d'onde B 9271.3 LC tronconique rectiligne tel que représenté sur la figure 1.

Avec ce dispositif associé aux structures perforées représentées sur les figures 3a et 3b, on a établi l'empreinte thermique du conteneur 54 telle que représentée sur la partie B de la figure 6. Cette empreinte donne la hauteur h du conteneur, en fonction de la différence de température dT, exprimée en °C, entre les surfaces cibles chaudes ou de mesure $M_i$ du conteneur 54, définies par les perforations 46a de la règlette 40, et les surfaces cibles froides ou de référence $R_j$ définies sur les montants 70 de la cage 52 et repérées par les perforations 46b de la règlette 42 : i et j sont des entiers positifs.

Systématiquement, huit points de référence notés R1 à R8 sont repérés en température, dans cet ordre sur les montants verticaux 70 de la cage 52 et à la suite 9 points de mesure M1 à M9 sont repérés en température sur la génératrice 60 du conteneur 54 à l'aide de la règlette 40.

Le micro-ordinateur 16 a été programmé pour effectuer une détermination en température pendant 1,5 seconde (ce qui correspond à une intégration du signal infrarouge émis par une surface cible pendant 1,5 seconde). A chaque pression de l'opérateur sur le déclencheur 21, commandant l'ouverture du diaphragme d'entrée 23 du pyromètre, la détermination de la température correspondante est imprimée sur la table traçante 17, accompagnée du numéro d'ordre du profil thermique P par exemple et du numéro d'ordre du point de mesure $M_i$ dans le profil.

Le pyromètre utilisé a une résolution de 0,1°C et peut stocker 500 points de mesure.

Les profils thermiques établis grâce au dispositif de l'invention permettent un contrôle non destructif des objets calogènes.

Le profil P a été tracé en calculant la moyenne $\overline{T}_R$ des points de référence R1 à R8 et en calculant les différences $T_{Mi} - \overline{T}_R = dT_i$ pour les neuf points de mesure M1 à M9.

Afin d'obtenir des profils reproductibles, il est nécessaire que l'environnement de l'objet thermique à contrôler soit en équilibre thermique avec ce dernier.

Le dispositif de l'invention a pour but d'évaluer des flux thermiques par mesure de différences de température entre des points représentatifs de la fuite thermique totale du conteneur. Le repérage exact des températures absolues réelles n'a donc pas d'intérêt, seules les différences de température doivent être connues.

Une fois mis au point les protocoles d'acquisition des mesures, de stockage, de traitement et d'interprétation des données brutes, le dispositif selon l'invention apparaît comme particulièrement peu contraignant et particulièrement rapide pour la détermination simultanée de profils thermiques et de flux thermiques dans les gammes de puissance thermique de celles dégagées par les conteneurs contenant de la matière calogène.

En particulier, ce dispositif permet un contrôle en série d'un grand nombre de conteneurs, de formes et dimensions identiques, logés dans les cages de transport telles que 52.

Un autre exemple d'application du dispositif selon l'invention est représenté sur la figure 7. Dans cette application, le conteneur 80 dont on veut établir l'empreinte thermique est d'un type différent de celui représenté sur la figure 5 ; ses caractéristiques géométriques externes imposent en particulier une trame ponctuelle de surfaces cibles et des dimensions du guide d'onde du dispositif selon l'invention, différentes du cas précédent.

Dans cette application, le conteneur 80 peut recevoir jusqu'à six sous-conteneurs cylindriques 82 répartis en couronne. Dans ce cas, il convient de connaître l'empreinte thermique sur la paroi externe du conteneur 80 à mi-hauteur des sous-conteneurs 82, comme représenté sur la figure 7.

La structure perforée destinée à définir la trame ponctuelle de la paroi chaude du conteneur 80 est alors constituée de la pince 44 telle que représentée sur la figure 4B. Cette pince 44 s'adapte exactement entre les ailettes de refroidissement 84 du conteneur 80. Cette pince 44 est équipée B 9271.3 LC d'une tige 86, disposée perpendiculairement au plan contenant l'anneau 45 de la pince ; elle détermine la hauteur de positionnement de l'anneau 45 par rapport à la plaque support inférieure 88 du conteneur 80.

Le positionnement radial des perforations de mesure 50, ici crucial, est obtenu par la mise en coïncidence du système de fermeture 90 du couvercle 92 avec l'extrémité supérieure de la tige 86.

Les douze perforations de mesure 50 de 3 mm de diamètre, permettent le tracé de l'empreinte thermique du conteneur 80.

La structure perforée qui est destinée à définir la trame ponctuelle de la paroi froide, est constituée d'une simple réglette 42 telle que représentée sur la figure 3b, en PVC, fixée magnétiquement sur la cage de transport 96 du conteneur 80, équipée des deux perforations de mesure 46b, de 3 mm de diamètre. Sa longueur est exactement égale à la hauteur des cornières verticales 98 de la cage de transport 96. Ces cornières sont équipées d'un repère (encoche par exemple à l'une de leurs extrémités) afin de positionner toujours au même endroit les réglettes 42.

Le guide d'onde qui équipe le pyromètre à infrarouge utilisé pour le conteneur 80 permet la détermination du flux élémentaire d'une surface cible de 2 mm de diamètre, et présente un trajet optique de 17 cm.

La nécessité de devoir relever l'empreinte thermique du conteneur 80, tout autour de celui-ci, alors que souvent une face au moins du conteneur est inaccessible, impose l'utilisation du guide d'onde tel que représenté sur la figure 1.

Le dispositif de l'invention, bien que nécessitant un étalonnage préalable obligatoire et donc un système de traitement informatique énormément simplifié par rapport à l'utilisation d'une caméra infrarouge, présente un prix de revient dix fois plus faible que celui d'une caméra à infrarouge.

En outre, son encombrement et son poids sont beaucoup plus faibles que celui d'une caméra à infrarouge ce qui en fait ainsi un dispositif portatif. En effet, le pyromètre à infrarouge 2 pèse moins de 1 kg, l'unité de stockage et de traitement informatique 14-16 pèse moins de 2 kg, le guide d'onde 20 ne pèse pas plus de 100 g et les structures perforées pas plus de 200 g.

**Revendications**

1. Dispositif pour relever l'empreinte thermique d'un objet calogène comportant :
   - des premiers moyens (40, 44) pour repérer sur l'objet un premier ensemble d'éléments de surfaces cibles (10a, Mi) définissant une surface chaude,
   - des seconds moyens (42) pour repérer un second ensemble d'éléments de surfaces cibles (10a, Ri) définissant une surface froide, sur une structure thermiquement conductrice (52, 96) située dans le milieu environnant l'objet calogène (54, 80), les deux surfaces chaude et froide servant à la détermination du flux thermique total dégagé par l'objet,
   - un guide d'onde infrarouge (20, 20a, 20b, 20c) présentant une première extrémité et une seconde extrémité (22) destinée à être placée successivement au contact de chaque élément de surface cible, ce guide servant véhiculer le rayonnement infrarouge émis par l'élément de surface (10a) en contact avec ladite seconde extrémité (22),
   - un pyromètre à infrarouge (2) fixé à la première extrémité du guide d'onde, pourvu d'une optique d'entrée (6) destinée à focaliser le rayonnement infrarouge véhiculé par le guide d'onde sur un détecteur pyroélectrique (8) délivrant un signal électrique représentatif du nombre de photons infrarouges émis par l'élément de surface (10a) en contact avec ladite seconde extrémité (22),
   - des moyens de traitement (14) du signal électrique pour déterminer la température de l'élément de surface (10a) en contact avec ladite seconde extrémité, en vue d'établir l'empreinte thermique (P) de l'objet (54, 80).

2. Dispositif selon la revendication 1, caractérisé en ce que des moyens de mémorisation (16) et/ou des moyens de visualisation (17) de ladite température sont prévus.

3. Dispositif selon la revendication 1 ou 2, caractérisé en ce que le guide d'onde (20) est pourvu à sa seconde extrémité d'un embout souple (24) destiné à épouser la forme de l'élément de surface (10a) à son contact.

4. Dispositif selon l'une quelconque des revendications 1 à 3, caractérisé en ce que le guide d'onde (20) est un cylindre creux de forme tronconique, le petit diamètre du tronc de cône étant situé à la seconde extrémité (22).

5. Dispositif selon l'une quelconque des revendications 1 à 3, caractérisé en ce que le guide d'onde (20a, 20b) est coudé et comporte en son ou ses coudes (32) un miroir de renvoi (36) du rayonnement infrarouge.

6. Dispositif selon l'une quelconque des revendications 1 à 3, caractérisé en ce que le guide d'onde (20c) est articulé et pourvu à son ou ses articulations (34) d'un miroir de renvoi (36) du rayonnement infrarouge.

7. Dispositif selon l'une quelconque des revendications 1 à 6, caractérisé en ce que le guide d'onde (20, 20a, 20b, 20c) est formé d'une feuille d'aluminium enroulée (26), recouverte d'un isolant thermique (28).

8. Dispositif selon l'une quelconque des revendications 1 à 7, caractérisé en ce que le guide d'onde est équipé d'un manchon de préhension (30), isolant thermiquement.

9. Dispositif selon l'une quelconque des revendications 1 à 8, caractérisé en ce que les premiers moyens de repérage (40, 44) sont formés de réglettes (40) ou de ceintures (44) perforées.

10. Dispositif selon l'une quelconque des revendications 1 à 9, caractérisé en ce que les seconds moyens de repérage sont formés de réglettes perforées (42).

11. Dispositif selon la revendication 9 ou 10, caractérisé en ce que les réglettes (40, 42) ou ceintures (44) sont réalisées en polychlorure de vinyle semi-rigide.

12. Dispositif selon l'une quelconque des revendications 1 à 11, caractérisé en ce que les premiers et/ou seconds moyens de repérage sont pourvus de deux types de perforations (46a, 46b, 50, 48a, 48b, 51).

FIG. 1

029599C

FIG. 2a

FIG. 2b

FIG. 2c

FIG. 5

FIG. 3a

FIG. 3b

029599C

FIG. 7

FIG. 4          A          B

FIG.6

# RAPPORT DE RECHERCHE EUROPEENNE

**Office européen des brevets**

Numero de la demande

EP 88 40 1288

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 247 364 (EL WAZIRI) <br> --- | | G 01 J 5/00 |
| A | US-A-3 626 758 (E. STEWART) <br> --- | | |
| A | FR-A-1 545 505 (PITTSBURGH PLATE GLASS CO.) <br> ----- | | |

DOMAINES TECHNIQUES RECHERCHES (Int. Cl.4)

G 01 J
G 01 N

Le présent rapport a été établi pour toutes les revendications

| Lieu de la recherche | Date d'achèvement de la recherche | Examinateur |
|---|---|---|
| LA HAYE | 05-09-1988 | VAN DEN BULCKE E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)